# EUROPEAN PATENT APPLICATION

(11) **EP 4 822 977 A1**
(43) Date of publication of application: **14.10.2026**
(21) Application number: 26170156.9
(22) Date of filing: 01.04.2026
(51) Int. Cl.: H02M 3/335, G03G 15/00, H02M 1/44

(54) **POWER SUPPLY DEVICE AND IMAGE FORMING APPARATUS**

(30) Priority: 07.04.2025 JP 2025062952
(71) Applicant: KYOCERA Document Solutions Inc., Osaka-shi, Osaka 540-8585 (JP)
(72) Inventor: SUEISHI, Naoki, Osaka, 540-8585 (JP)
(74) Representative: Becker Kurig & Partner Patentanwälte mbB

(57) **Abstract**

A power supply device includes a plurality of power supply circuits and a control part. Each of the plurality of power supply circuits includes an exciting coil, a first switching element, a detection coil, and a second switching element. The first switching element is connected to a primary coil of the transformer and the exciting coil. The second switching element is connected to the detection coil and either ground or a capacitor connected in parallel to the detection coil. The control part is configured to turn on the second switching element when the first switching element is turned off.

## Description

### BACKGROUND

The present disclosure relates to a power supply device and an image forming apparatus.

An electrophotographic image forming apparatus includes a plurality of loads. The plurality of loads includes a photosensitive drum whose potential is changed by irradiation with light, a charging device for charging the photosensitive drum, and an exposure device for forming an electrostatic latent image on the photosensitive drum by emitting a laser beam corresponding to image data. The plurality of loads includes a developing device for supplying toner to the photosensitive drum to develop the electrostatic latent image, a transfer device for applying a transfer voltage to a sheet held between a transfer roller and the photosensitive drum to transfer a toner image to the sheet, and a separation device for applying a separation voltage to the sheet to separate the sheet from the photosensitive drum. Further, the plurality of loads includes a cleaning device for removing the toner remaining on the photosensitive drum and a fixing device for heating the toner to fix the toner to the sheet. The image forming apparatus includes a power supply device for converting electric power supplied from a commercial power supply into a voltage corresponding to each load. The power supply device includes a plurality of transformers having a rating corresponding to each load, but a plurality of transformers having the same rating may be used.

When a plurality of transformers having the same rating are disposed close to each other on one board, interference between the transformers may occur as follows. As an example, for the purpose of reducing the size of a power supply device in an image forming apparatus dedicated to monochrome printing, it is assumed that a transformer for supplying power to the transfer device and a transformer for supplying power to the separation device are disposed close to each other on a substrate and that the two transformers have the same rating. In this case, the operating frequencies of the circuits of the transfer device and the separation device are the same. The transfer device turns on the transfer voltage when the leading end of the sheet enters the nip region between the transfer roller and the photosensitive drum, while the separation device turns on the separation voltage before the sheet enters the nip region. That is, there exists a period in which the separation voltage is ON while the transfer voltage is OFF. In this case, there is a possibility that an induced electromotive force is generated in the secondary coil of the transformer of the transfer device due to the change of the magnetic field generated in the primary coil of the transformer of the separation device. Then, since the operating frequencies of the circuits of the separation device and the transfer device are the same, the transfer voltage which should be OFF turns ON unexpectedly.

### SUMMARY

A power supply device according to the present disclosure includes a plurality of power supply circuits and a control part. The plurality of power supply circuits includes transformers having the same rating. The control part is configured to control the plurality of power supply circuits. Each of the transformers includes a primary coil. Each of the plurality of power supply circuits includes an exciting coil, a first switching element, a detection coil, and a second switching element. The first switching element is connected to the primary coil and the exciting coil. The second switching element is connected to the detection coil and either ground or a capacitor connected in parallel to the detection coil. The control part is configured to turn on the second switching element when the first switching element is turned off.

An image forming apparatus according to the present disclosure includes the power supply device. The plurality of power supply circuits includes a first power supply circuit and a second power supply circuit. The second power supply circuit is different from the first power supply circuit. The image forming apparatus further includes a transfer device and a separation device. The transfer device is connected to the first power supply circuit and configured to apply a transfer voltage to a sheet held between a photosensitive drum and the transfer device to transfer a toner image to the sheet. The separation device is connected to the second power supply circuit and configured to apply a separation voltage to the sheet to separate the sheet from the photosensitive drum.

### BRIEF DESCRIPTION OF THE DRAWINGS

FIG. 1 is a perspective view showing an appearance of an image forming apparatus according to one embodiment of the present disclosure.
FIG. 2 is a front view showing a hardware configuration of the image forming apparatus according to the embodiment of the present disclosure.
FIG. 3 is a timing diagram showing voltages supplied to various parts of the image forming apparatus according to the embodiment of the present disclosure.
FIG. 4 is a block diagram showing an electrical configuration of the image forming apparatus according to the embodiment of the present disclosure.
FIG. 5 is a circuit diagram showing a power supply circuit according to the embodiment of the present disclosure.

### DETAILED DESCRIPTION

<Embodiment> Hereinafter, with reference to the drawings, an image forming apparatus 1 according to an embodiment of the present disclosure will be described.

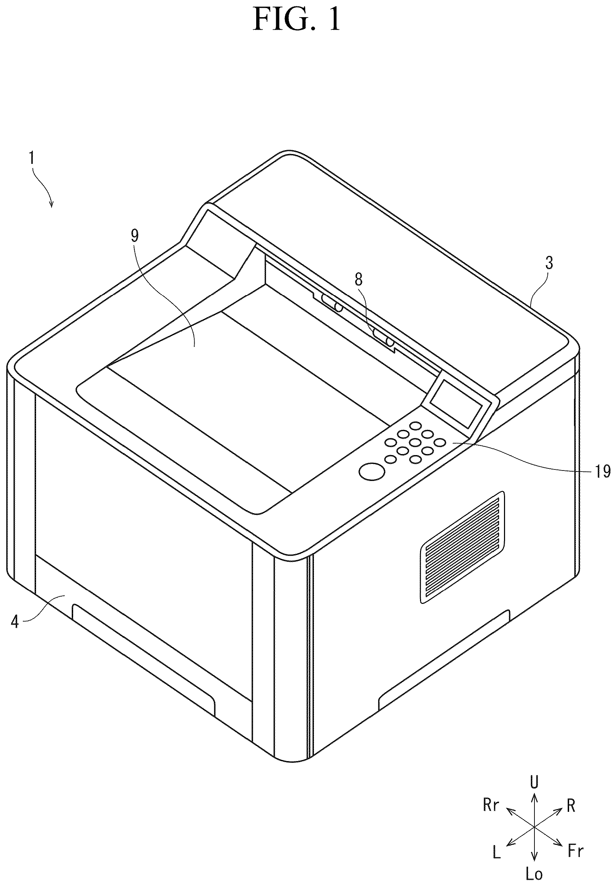

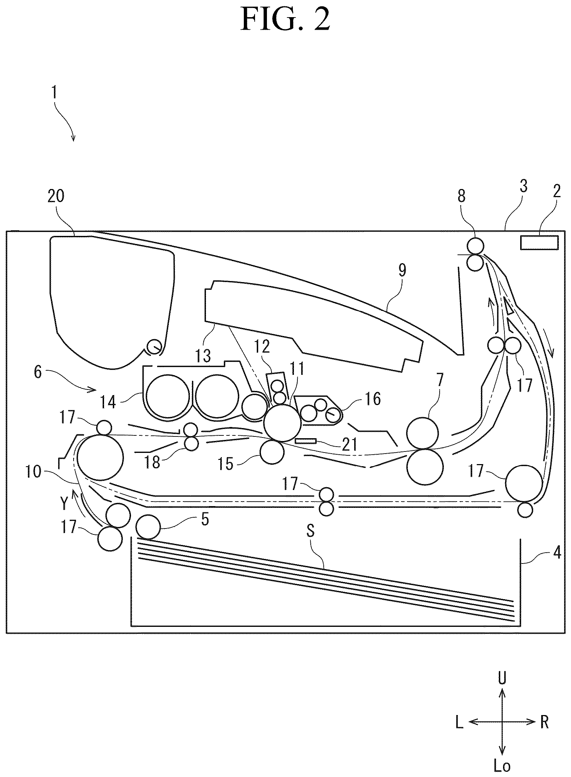

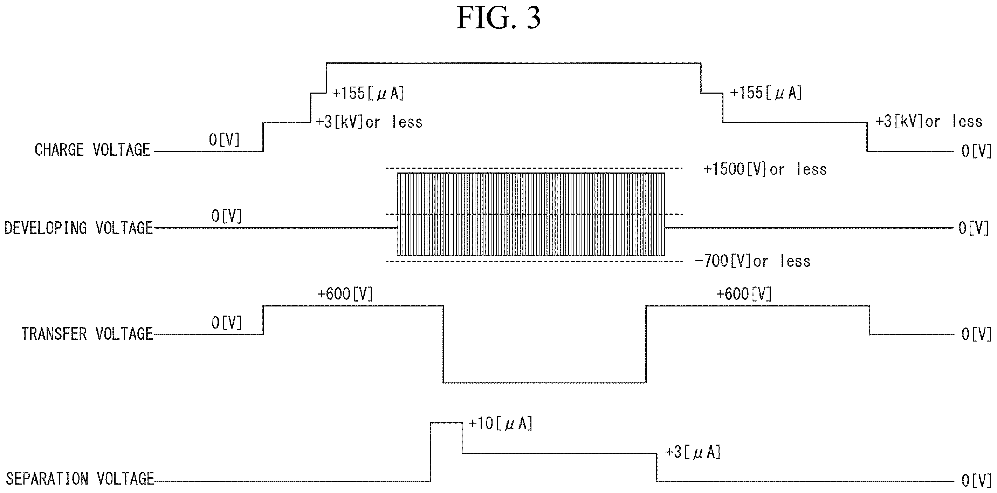

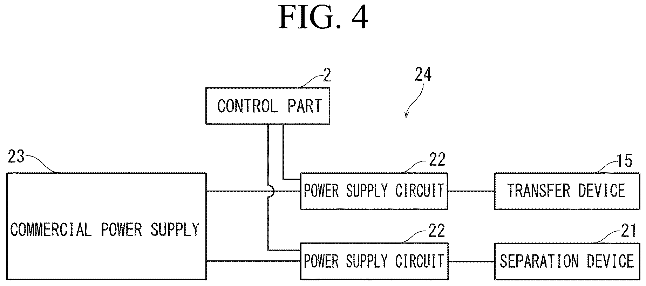

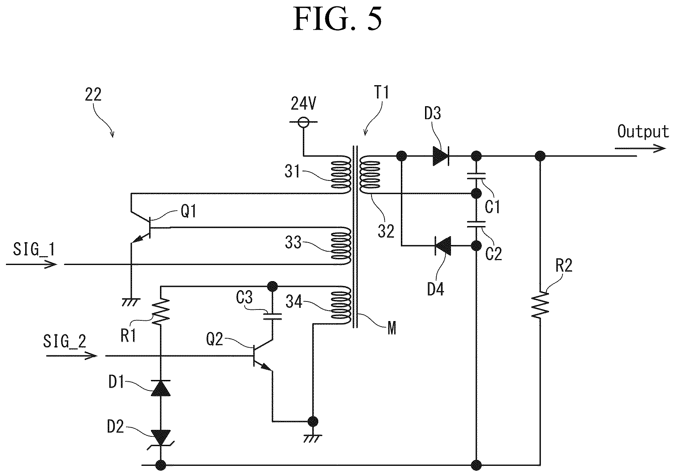

FIG. 1 is a perspective view showing an appearance of the image forming apparatus 1. FIG. 2 is a front view showing a hardware configuration of the image forming apparatus 1. FIG. 3 is a timing diagram showing voltages supplied to various parts of the image forming apparatus 1. FIG. 4 is a block diagram showing an electrical configuration of the image forming apparatus 1. FIG. 5 is a circuit diagram showing a power supply circuit 22. In each figure, U, Lo, L, R, Fr, and Rr indicate the upper, lower, left, right, front, and rear, respectively. These directions are determined only for convenience of explanation.

The image forming apparatus 1 includes a rectangular parallelepiped housing 3. In the lower portion of the inside of the housing 3, a sheet feeding cassette 4 in which a sheet S is stored and a sheet feeding roller 5 which feeds the sheet S from the sheet feeding cassette 4 are provided. Above the sheet feeding cassette 4, an image forming device 6 which forms a toner image by an electrophotographic method is provided, and a fixing device 7 which fixes the toner image to the sheet S is provided on the rear side of the image forming device 6. Above the fixing device 7, a discharge roller 8 which discharges the sheet S on which the toner image is fixed, and a discharge tray 9 on which the discharged sheets S are stacked are provided.

Inside the housing 3, a conveying path 10 is provided from the sheet feeding roller 5 through the image forming device 6 and the fixing device 7 to the discharge roller 8. The conveying path 10 is formed of plate-like members facing each other with a gap for passing the sheet S, and conveying rollers 17 for holding and conveying the sheet S are provided at a plurality of locations in the conveying direction Y. A registration roller 18 is provided on the upstream side of the image forming device 6 in the conveying direction Y.

The image forming device 6 includes a photosensitive drum 11 whose potential changes by irradiation with light, a charging device 12 which charges the photosensitive drum 11, an exposure device 13 which emits a laser light corresponding to image data, and a developing device 14 which supplies toner to the photosensitive drum 11. Further, the image forming device 6 includes a transfer device 15 which generates a transfer bias, a separation device 21 which applies a separation voltage to the sheet S to separate the sheet S from the photosensitive drum 11, and a cleaning device 16 which removes the toner remaining on the photosensitive drum 11. A toner container 20 which supplies the toner to the developing device 14 is connected to the developing device 14.

As an example, the photosensitive drum 11 includes a photosensitive body of a positive charging type. The charging device 12 is a positive DC (Direct Current) charging roller and positively charges the photosensitive drum 11. The developing device 14 positively charges the toner. The transfer device 15 generates a negative transfer bias. The toner is magnetic toner. The image forming device 6 of the positive charging type has an advantage of generating less ozone than a negative charging type. The present disclosure may be applied to the image forming apparatus 1 in which the polarities of charging and transfer bias are opposite to those described above. Further, the present disclosure may be applied to the image forming apparatus 1 including an AC (Alternating Current) charging roller or the image forming apparatus 1 using nonmagnetic toner.

A control part 2 includes an arithmetic part and a storage part. The arithmetic part is, for example, a CPU (Central Processing Unit). The storage part includes a storage medium such as ROM (Read Only Memory), RAM (Random Access Memory), and EEPROM (Electrically Erasable Programmable Read Only Memory). The arithmetic part executes various processes by reading and executing the control program stored in the storage part. The control part 2 may be implemented by an integrated circuit that does not use software.

A display operation part 19 is provided on the right side portion of the upper surface of the housing 3. The display operation part 19 includes a display panel and a keypad adjacent to the display panel. The control part 2 causes the display panel to display a screen presenting the operation menu, status, and the like of the image forming apparatus 1 and controls each part of the image forming apparatus 1 according to the operation detected by the keypad.

The basic image forming operation of the image forming apparatus 1 is as follows. When a single-sided printing job is input to the image forming apparatus 1 from an external computer or the like, the sheet feeding roller 5 feeds the sheet S from the sheet feeding cassette 4 to the conveying path 10. Next, the registration roller 18 whose rotation is stopped corrects the skew of the sheet S, and the registration roller 18 sends the sheet S to the image forming device 6 at a predetermined timing. In the image forming device 6, the charging device 12 charges the photosensitive drum 11 to a predetermined potential, and the exposure device 13 writes an electrostatic latent image on the photosensitive drum 11. Then, the developing device 14 forms a toner image by developing the electrostatic latent image using the toner supplied from the toner container 20, and the transfer device 15 transfers the toner image to the sheet S. Subsequently, the fixing device 7 fuses the toner image while holding and conveying the sheet S to fix the toner image to the sheet S, and the discharge roller 8 discharges the sheet S to the discharge tray 9.

The image forming apparatus 1 includes a plurality of loads, and the plurality of loads includes the photosensitive drum 11, the charging device 12, the exposure device 13, the developing device 14, the transfer device 15, the separation device 21, the cleaning device 16, and the fixing device 7. The image forming apparatus 1 also includes a power supply device 24 which converts electric power supplied from a commercial power supply 23 into a voltage corresponding to each load.

In the power supply device 24, for the purpose of making the power supply device 24 compact, a plurality of transformers T1 having the same rating may be disposed close to each other on one substrate (not shown), and in this case, interference may occur between the transformers T1. As an example, in the image forming apparatus 1 dedicated to monochrome printing, it is assumed that the transformer T1 supplying power to the transfer device 15 and the transformer T1 supplying power to the separation device 21 are disposed close to each other on the substrate and that the two transformers T1 have the same rating. In this case, the operating frequencies of the circuits of the transfer device 15 and the separation device 21 are the same. The transfer device 15 turns on the transfer voltage when the leading end of the sheet S enters a nip region between the transfer device 15 and the photosensitive drum 11, while the separation device 21 turns on the separation voltage before the sheet S enters the nip region. That is, there exists a period in which the separation voltage is ON while the transfer voltage is OFF (see FIG. 3). In this case, there is a possibility that an induced electromotive force is generated in the secondary coil 32 of the transformer T1 of the transfer device 15 due to the change of the magnetic field generated by the primary coil 31 of the transformer T1 of the separation device 21. Then, since the operating frequencies of the circuits of the separation device 21 and the transfer device 15 are the same, the transfer voltage which should be OFF turns ON unexpectedly. Therefore, the power supply device 24 according to the present embodiment has the following configuration.

The power supply device 24 includes a plurality of power supply circuits 22 having the transformers T1 having the same rating and the control part 2 which controls the plurality of power supply circuits 22. Each of the plurality of power supply circuits 22 includes an exciting coil 33, a first switching element Q1 connected to the primary coil 31 of the transformer T1 and the exciting coil 33, and a detection coil 34. Each of the plurality of power supply circuits 22 includes a capacitor C3 connected in parallel to the detection coil 34 and a second switching element Q2 connected to the capacitor C3 and the detection coil 34. The control part 2 turns on the second switching element Q2 when the first switching element Q1 is turned off.

In this embodiment, it is assumed that two of the power supply circuits 22 among the plurality of power supply circuits 22 of the power supply device 24 include the transformers T1 having the same rating. It should be noted that the present disclosure is also applicable to a case where three or more power supply circuits 22 among the plurality of power supply circuits 22 of the power supply device 24 include the transformers T1 having the same rating.

The two power supply circuits 22 are connected to the transfer device 15 and the separation device 21, respectively. The two power supply circuits 22 include the transformers T1 having the same rating. The primary coil 31, the exciting coil 33, and the detection coil 34 are provided on the primary side of the transformer T1. An input voltage of 24V is applied to one end of the primary coil 31.

The first switching element Q1 is a bipolar transistor. The collector of the first switching element Q1 is connected to the other end of the primary coil 31. The emitter of the first switching element Q1 is grounded. The base of the first switching element Q1 is connected to one end of the exciting coil 33. A control signal SIG_1 is input from the control part 2 to the other end of the exciting coil 33.

One end of the detection coil 34 is connected to one end of the capacitor C3 and one end of the resistor R1. The second switching element Q2 is a bipolar transistor. The collector of the second switching element Q2 is connected to the other end of the capacitor C3. The emitter of the second switching element Q2 is grounded. The cathode of a diode D1 is connected to the other end of the resistor R1. The anode of the diode D1 is connected to the anode of a Zener diode D2. A control signal SIG_2 is input from the control part 2 to the base of the second switching element Q2. The control signal SIG_2 is a signal obtained by logically inverting the control signal SIG_1.

The anode of a diode D3 and the cathode of a diode D4 are connected to one end of the secondary coil 32. The cathode of the diode D3 applies an output voltage Output to the load. The cathode of the diode D3 is connected to one end of a capacitor C1. The other end of the capacitor C1 is connected to the other end of the secondary coil 32 and one end of a capacitor C2. The other end of the capacitor C2 is connected to the anode of the diode D4 and the cathode of the Zener diode D2. The cathode of the diode D4 is connected to one end of the secondary coil 32. A resistor R2 is connected between one end of the capacitor C1 and the other end of the capacitor C2.

The control part 2 turns off the second switching element Q2 when the first switching element Q1 is turned on. More specifically, when the control part 2 turns on the control signal SIG_1, the first switching element Q1 enters a conductive state, and the primary coil 31 is excited by the exciting coil 33. Next, an induced electromotive force is generated in the secondary coil 32 by the change of the magnetic field generated by the primary coil 31, and an output voltage is applied to the load. At this time, since the control signal SIG_2 is OFF, the second switching element Q2 is in a non-conductive state.

On the other hand, the control part 2 turns on the second switching element Q2 when the first switching element Q1 is turned off. More specifically, when the control part 2 turns on the control signal SIG_2, the second switching element Q2 enters a conductive state, but the capacitor C3 is connected to the second switching element Q2. Therefore, the resonance frequency of the detection coil 34 is different from that of the primary coil 31 and the exciting coil 33. Therefore, the detection coil 34 does not resonate with the magnetic field generated by the primary coil 31 of the other power supply circuit 22. Therefore, according to the present embodiment, interference between the plurality of transformers T1 having the same rating can be reduced.

The power supply device 24 according to the embodiment described above includes the plurality of power supply circuits 22 including the transformers T1 having the same rating and the control part 2 which controls the plurality of power supply circuits 22. Each of the plurality of power supply circuits 22 includes the exciting coil 33, the first switching element Q1 connected to the primary coil 31 of the transformer T1 and the exciting coil 33, and the detection coil 34. Each of the plurality of power supply circuits 22 includes the capacitor C3 connected in parallel to the detection coil 34 and the second switching element Q2 connected to the capacitor C3 and the detection coil 34. The control part 2 turns on the second switching element Q2 when the first switching element Q1 is turned off. According to this embodiment, interference between the plurality of transformers T1 having the same rating can be reduced.

The image forming apparatus 1 according to this embodiment includes the power supply device 24 including the plurality of power supply circuits 22. The plurality of power supply circuits 22 includes the power supply circuit (referred to as a first power supply circuit) 22 connected to the transfer device 15 and the power supply circuit (referred to as a second power supply circuit) 22 connected to the separation device 21.

The image forming apparatus 1 also includes the transfer device 15 which is connected to the first power supply circuit 22 and transfers the toner image to the sheet S by applying a transfer voltage to the sheet S held between the photosensitive drum 11 and the transfer device 15. Further, the image forming apparatus 1 includes the separation device 21 which is connected to the second power supply circuit 22 and separates the sheet S from the photosensitive drum 11 by applying a separation voltage to the sheet S. According to this embodiment, when the separation voltage is ON and the transfer voltage is OFF, it is possible to prevent the transfer voltage from being turned ON due to interference between the transformers T1.

The above embodiment may be modified as follows.

<Modified Example 1 of Embodiment> Although the above embodiment shows an example where the capacitor C3 is connected to the detection coil 34, the detection coil 34 may be connected to the ground instead of the capacitor C3. That is, the power supply device 24 includes the plurality of power supply circuits 22 including the transformers T1 having the same rating and the control part 2 which controls the plurality of power supply circuits 22. Each of the plurality of power supply circuits 22 includes the exciting coil 33, the first switching element Q1 connected to the primary coil 31 of the transformer T1 and the exciting coil 33, the detection coil 34, and the second switching element Q2 connected to the ground and the detection coil 34. The control part 2 turns on the second switching element Q2 when the first switching element Q1 is turned off. This configuration also reduces interference between the plurality of transformers T1 having the same rating.

<Modified Example 2 of Embodiment> A magnetic body M as shown in FIG. 5 may be inserted through the primary coil 31, the secondary coil 32, the exciting coil 33, and the detection coil 34 of the above embodiment. The magnetic body M may be made of, for example, ferrite, metal amorphous, or electromagnetic steel plate. According to these configurations, the power supply circuit 22 can change the operating frequency of the power supply circuit 22 to a frequency (referred to as a second frequency) different from the frequency before connection (referred to as a first frequency) when the capacitor C3 is connected to the detection coil 34 by turning on the second switching element.

<Modified Example 3 of Embodiment> The power supply circuit 22 of the above embodiment may not include the capacitor C3. In this case, one end of the detection coil 34 may be connected to the collector, which is one end of the second switching element Q2. The emitter which is the other end of the second switching element Q2 and the other end of the detection coil 34 may be grounded as in the above embodiment. The second switching element Q2 may be configured to ground one end of the detection coil 34 when turned on and to eliminate the grounding of one end of the detection coil 34 when turned off.

Although the disclosure has been described for specific embodiments, the disclosure is not limited to the foregoing embodiments.

## Claims

1. A power supply device (24) comprising:
a plurality of power supply circuits (22) including transformers (T1) having the same rating; and
a control part (2) configured to control the plurality of power supply circuits (22), wherein
each of the transformers (T1) includes a primary coil (31),
each of the plurality of power supply circuits (22) includes
an exciting coil (33),
a first switching element (Q1) connected to the primary coil (31) and the exciting coil (33),
a detection coil (34), and
a second switching element (Q2) connected to the detection coil (34) and either ground or a capacitor (C3) connected in parallel to the detection coil (34), and
the control part (2) is configured to turn on the second switching element (Q2) when the first switching element (Q1) is turned off.

2. The power supply device (24) according to claim 1, wherein
each of the plurality of power supply circuits (22) further includes:
a secondary coil (32) configured to apply to a load a voltage generated by a change of magnetic field generated by the primary coil (31); and
a magnetic body (M) inserted through the exciting coil (33), the primary coil (31), the secondary coil (32), and the detection coil (34).

3. The power supply device (24) according to claim 1 or 2, wherein
one end of the detection coil (34) is connected to one end of the capacitor (C3),
the other end of the capacitor (C3) is connected to one end of the second switching element (Q2),
the other end of the second switching element (Q2) is connected to the other end of the detection coil (34), and
the second switching element (Q2) is configured
to connect the other end of the detection coil (34) to the other end of the capacitor (C3) when turned on and
to disconnect the other end of the detection coil (34) from the other end of the capacitor (C3) when turned off.

4. The power supply device (24) according to claim 1 or 2, wherein
one end of the detection coil (34) is connected to one end of the second switching element (Q2),
the other end of the second switching element (Q2) and the other end of the detection coil (34) are connected to the ground, and
the second switching element (Q2) is configured
to connect the one end of the detection coil (34) to the ground when turned on and
to disconnect the one end of the detection coil (34) from the ground when turned off.

5. An image forming apparatus (1) comprising the power supply device according to any one of claims 1 to 4, wherein
the plurality of power supply circuits (22) includes a first power supply circuit (22) and a second power supply circuit (22) different from the first power supply circuit (22), and
the image forming apparatus (1) further comprises:
a transfer device (15) connected to the first power supply circuit (22) and configured to apply a transfer voltage to a sheet (S) held between a photosensitive drum (11) and the transfer device (15) to transfer a toner image to the sheet (S); and
a separation device (21) connected to the second power supply circuit (22) and configured to apply a separation voltage to the sheet (S) to separate the sheet (S) from the photosensitive drum (11).
